# EUROPÄISCHE PATENTSCHRIFT

(11) **EP 2 626 571 B1**
(45) Veröffentlichungstag und Bekanntmachung des Hinweises auf die Patenterteilung: **23.10.2019**
(21) Anmeldenummer: 12154491.0
(22) Anmeldetag: 08.02.2012
(51) Int. Cl.: F04D 29/42, F04D 29/62, F16L 23/10

(54) **Spannring mit Kraftbegrenzung**
Circlip with force limitation
Bague de serrage dotée d'une limitation de force

(43) Veröffentlichungstag der Anmeldung: 14.08.2013
(73) Patentinhaber: Grundfos Holding A/S, 8850 Bjerringbro (DK)
(72) Erfinder: Saaby Mikkelsen, Knud Jørgen, 8643 Ans by (DK)
(74) Vertreter: Patentanwälte Vollmann Hemmer Lindfeld Partnerschaft mbB

(56) Entgegenhaltungen:
- DE-U1- 9 411 712
- FR-A1- 2 405 384
- GB-A- 1 140 636
- KR-A- 20030 050 647
- US-A- 2 688 170
- US-A- 2 837 383
- US-A- 3 016 249
- US-A- 4 919 453
- US-A- 5 454 606
- US-A- 6 030 006
- US-B2- 6 755 445

## Beschreibung

Die Erfindung betrifft einen Spannring zur Verbindung zweier Flansche, insbesondere zur Verbindung eines motorgehäuseseitigen Flansches mit einem pumpegehäuseseitigen Flansch einer elektromotorisch angetriebenen Umwälzpumpe.

Spannringe für Flanschverbindungen zählen zum Stand der Technik. (DE 9 411 712 U1, US 3 016 249 A1, US 6 030 006 A1, US 4 919 453 A1).Sie weisen typischerweise einen offenen Ringabschnitt auf, welcher zur Aufnahme der zu verbindenden Flansche ausgebildet ist und dessen Enden mittels einer am Ringabschnitt angebrachten Spannvorrichtung verbunden sind, mit welcher die Enden des Ringabschnitts aufeinander zu bewegt und unter Eingliederung der Flansche gespannt werden können.

Zum Stand der Technik zählen ISO-Kleinflanschsysteme nach DIN 28 403 und ISO 2861. Solche Spannringe dienen zur Verbindung von Leitungsflanschen unter Eingliederung einer Dichtung, sie bestehen beispielsweise aus zwei offenen Ringabschnitten, die sich etwa um 180° erstrecken und die an einer Seite mit einem Gelenk und an der anderen Seite mit einer Spannvorrichtung in Form einer Spannschraube mit Mutter verbunden sind. Die Ringabschnitte sind regelmäßig überdimensioniert, so dass die Spannvorrichtung häufig das schwächste Glied darstellt. Dies ist grundsätzlich unproblematisch, wenn der Spannring vom Fachmann in der vorbestimmten Weise montiert wird. Es kann jedoch nicht ausgeschlossen werden, dass ein solcher Spannring auch einmal vom weniger versierten Heimwerker angebracht wird. Dann kann es bei unsachgemäßer Handhabung, insbesondere bei Benutzung eines Werkzeugs mit langem Hebelarm, dazu kommen, dass die Spannschraube über das bestimmungsgemäße Moment hinaus angezogen wird, was zum Abreißen der Schraube und somit zum spontanen Öffnen der Sprannringverbindung führen kann. Dies ist insbesondere bei Leitungen, in denen aggressive Flüssigkeiten oder erhitzte Flüssigkeiten oder Gase transportiert werden, gefährlich. Wenn beispielsweise bei einer Heizungsumwälzpumpe Motor und Pumpe über eine solche Flanschverbindung mittels Spannring verbunden sind, kann das plötzliche Versagen der Verbindung dazu führen, dass sich schwere Bauteile unkontrolliert lösen und zu Boden fallen und/oder heiße Flüssigkeit an dem dann freien Ende der Pumpe austritt.

Aus KR 20 030 050 647 A, von dem die Erfindung ausgeht, zählt es zum Stand der Technik, den Spannring an seinen offenen Ringabschnitt mittels einer Schraube zu verbinden, die an einem Ende angelenkt und am anderem Ende mit einer Mutter versehen ist, die unter Eingliederung einer Schraubenfeder den offenen Spannringabschnitt schließt. Dabei definiert die Feder die Spannkraft, wenn die Mutter soweit auf die Schraube aufgeschraubt ist, dass die Feder gespannt ist. Hierbei wird die Spannkraft durch die Federkraft begrenzt. Allerdings kann die durch die Feder gebildete Spannkraftbegrenzung durch Fehlbedienung überwunden werden, wenn nämlich die Mutter so weit angezogen wird, dass die Federwindungen aneinander anliegen.

Vor diesem Hintergrund liegt der Erfindung die Aufgabe zugrunde, einen Spannring so auszubilden, dass er auch gefahrlos vom Laien montiert werden kann, ohne dass die Gefahr eines plötzlichen unerwarteten Öffnens des Spannrings besteht.

Diese Aufgabe wird gemäß der Erfindung durch einen Spannring mit den in Anspruch 1 angegebenen Merkmalen gelöst. Vorteilhafte Ausgestaltungen der Erfindung ergeben sich aus den Unteransprüchen, der nachfolgenden Beschreibung und der Zeichnung.

Der erfindungsgemäße Spannring zur Verbindung zweier Flansche weist mindestens einen offenen Ringabschnitt auf, welcher zur Aufnahme der zu verbindenden Flansche ausgebildet ist und dessen Enden mittels einer am Ringabschnitt angebrachten Spannvorrichtung verbunden sind, mit welcher die Enden des Ringabschnitts aufeinander zu bewegt und unter Eingliederung der Flansche gespannt werden können. Die Spannvorrichtung weist ein Spannkraftbegrenzungsmittel auf. Durch das Spannkraftbegrenzungsmittel kann zuverlässig eine Überlastung der Spannvorrichtung und somit ein plötzlicher Bruch derselben beim Spannen verhindert werden. Das Spannkraftbegrenzungsmittel ist dabei zweckmäßigerweise so dimensioniert, dass eine Überlastung der Spannvorrichtung beim Spannen zuverlässig ausgeschlossen wird.

Grundgedanke der vorliegenden Erfindung ist es, den Spannring so auszubilden, dass dieser nicht mit einer unzulässig hohen Kraft angezogen werden kann, um so zu verhindern, dass der Spannring oder die Spannvorrichtung beim Anbringen derselben Schaden nimmt.

Grundsätzlich hat sich konstruktiv eine Schrauben-Mutter-Verbindung als Teil der Spannvorrichtung bewährt, wobei entweder schrauben- oder mutterseitig Formschlussmittel zum Ansetzen eines Werkzeugs vorgesehen sind. Gemäß der Erfindung bildet dabei das Formschlussmittel das Spannkraftbegrenzungsmittel des Spannrings. Eine solche Ausgestaltung ist besonders vorteilhaft, da lediglich ein Bauteil gesondert auszubilden ist, um eine Spannkraftbegrenzung des Spannrings zu erreichen.

Dabei weist die Spannvorrichtung eine Spannschraube auf, an deren Ende eine Werkzeugaufnahme angeordnet ist, welche so dimensioniert ist, dass die vom Werkzeug auf die Schraube übertragbare Kraft zur bestimmungsgemäßen Begrenzung der Spannkraft bemessen ist. Der gleiche Effekt kann auch in kinematischer Umkehr durch entsprechende Ausbildung einer Mutter erzielt werden. Die Ausbildung an der Spannschraube ist jedoch besonders vorteilhaft, da lediglich die Schraube, insbesondere der Schraubenkopf, an dem das Werkzeug anzusetzen ist entsprechend zu dimensionieren ist.

Gemäß der Erfindung weist die Spannschraube einen Schraubenkopf mit Innenprofil zur Aufnahme des Werkzeugs aufweist, da dann eine Spannkraftbegrenzung am einfachsten zu realisieren ist, indem das Innenprofil des Schraubenkopfes oder der Schraubenkopf selbst eine Größe aufweist, wie sie üblicherweise für eine Schraube kleineren Gewindedurchmessers als der der Spannschraube vorgesehen ist. Derartige Schrauben mit Innenprofil werden heutzutage gängigerweise eingesetzt, da sie besonders sicher mit einem Werkzeug zu montieren sind und wenig Gefahr des Abrutschens besteht. Zudem ist das Werkzeug weitgehend formschlüssig innerhalb des Schraubenkopfes aufgenommen. Derartige Profilierungen können beispielsweise Innensechskant, Torx, Schlitz, Philips, POSIDRIVE, Robertson, Tri-Wing oder dergleichen sein. Dabei hat sich erstaunlicherweise gezeigt, dass bei Verwendung eines Schraubenkopfes einer Größe, wie sie üblicherweise für eine Schraube kleineren Gewindedurchmessers vorgesehen ist, der gewünschte Effekt der Spannkraftbegrenzung meist schon in optimaler Form gegeben ist. So kann vorteilhaft beispielsweise eine Spannschraube mit M7-Gewinde und einem Schraubenkopf mit Innensechskantprofil Verwendung finden, wie er üblicherweise an einer Schraube mit M6-Gewinde vorgesehen ist. Eine solche Anordnung hat darüber hinaus den Vorteil, dass der Schraubenkopf ohne Spezialwerkzeug angezogen werden kann. Bei geeigneter Materialwahl, beispielsweise, wenn die Schraube vollständig aus Edelstahl besteht, ergibt sich bei der vorgenannten Kombination der Effekt, dass beim Anziehen der Schraube über ein bestimmungsgemäßes Drehmoment hinaus diese nicht weiter dreht, sondern das Werkzeug in der Aufnahme im Schraubenkopf rotiert, also das Innenprofil im Schraubenkopf beschädigt oder auch zerstört. Letzteres kann in der Regel ohne Weiteres in Kauf genommen werden, da ein gezieltes Entfernen der Schraube durch den Fachmann auch bei beschädigtem Schraubenkopf möglich ist, jedoch mit einer solchen technisch vergleichsweise wenig aufwändigen Konstruktion ein Überdehnen der Spannschraube und damit eine mögliche spontane Bruchgefahr zuverlässig verhindert werden kann.

Vorteilhaft weist mindestens ein Ringabschnitt des Spannrings ein nach innen offenes Rinnenprofil auf, so dass der Ringabschnitt mit seinem Rinnenprofil die beiden zu verbindenden Flansche umfangseitig sowie an den jeweils voneinander abgewandten Stirnseiten im Randbereich umgreifen kann. Eine solche Ausgestaltung stellt sicher, dass bei gespanntem Spannring neben der kraftschlüssigen Verbindung auch eine formschlüssige Verbindung besteht, welche unabhängig von der Spannkraft die Flansche formschlüssig miteinander verbindet.

Um beim Spannen der Spannvorrichtung eine Aufeinanderzubewegung der Flansche zu erzeugen, ist es vorteilhaft, wenn der offene Ringabschnitt eine Umfangswand und seitlich daran anschließende Seitenwände aufweist, die von der Umfangswand zur Längsmittelachse des Rings hin divergieren. Auf diese Weise wird bei einem Spannen der Spannvorrichtung ein Aneinanderpressen der Flansche erzielt. Dieser Effekt kann alternativ auch dadurch erzielt werden, dass die Flansche selbst abgeschrägt ausgebildet und die Seiten quer zur Längsmittelachse des Rings verlaufen.

Der erfindungsgemäße Spannring ist insbesondere vorteilhaft zur Verbindung von Pumpengehäuse und Motorgehäuse eines Kreiselpumpenaggregates einsetzbar.

Ein solches Kreiselpumpenaggregat weist einen elektrischen Motor auf, der in einem Motorgehäuse angeordnet ist und ein Kreiselrad, das in einem Pumpengehäuse angeordnet ist und von dem Motor angetrieben wird. Das Motorgehäuse weist einen motorgehäuseseitigen Flansch und das Pumpengehäuse einen pumpengehäuseseitigen Flansch auf, die mittels des Spannrings miteinander befestigt sind. Eine solche Befestigung ist besonders vorteilhaft, da sie typischerweise mit nur einer Schraube gelöst bzw. hergestellt werden kann. Wenn dann diese Schraube wie vorbeschrieben ausgebildet ist, ergibt sich eine hohe Sicherheit gegen Fehlbedienung beim Festsetzen des Spannrings.

Vorteilhaft ist diese Flanschverbindung mit einem einseitigen Zentriervorsprung ausgebildet, der in eine entsprechend auf der anderen Seite ausgebildeten Zentrierbohrung eingreift, um sicherzustellen, dass keine Fluchtungsfehler auftreten. Besonders vorteilhaft ist der Zentriervorsprung am Motorgehäuse, nämlich an dem motorgehäuseseitigen Flansch, vorgesehen und die Zentrierbohrung innerhalb des Pumpengehäuseseitigen Flansches. Grundsätzlich kann die Anordnung jedoch auch umgekehrt sein.

Um hierbei auch die Dichtigkeit der Gehäuseverbindungen sicherzustellen, ist vorteilhaft eine Dichtung eingegliedert, vorzugsweise ein O-Ring, der stirnseitig am motorgehäuseseitigen Zentriervorsprung und innerhalb der pumpengehäuseseitigen Zentrierbohrung anliegt. Es kann zwischen dieser Verbindung vorteilhaft noch eine Lagerplatte zur Aufnahme eines Wellenlagers eingegliedert sein.

Die Erfindung ist nachfolgend anhand eines in der Zeichnung dargestellten Ausführungsbeispiels näher erläutert. Es zeigen:
- Fig. 1: in stark vereinfachter schematischer Darstellung ein Pumpenaggregat mit einer Spannringflanschverbindung im Schnitt,
- Fig. 2: das Pumpenaggregat in Seitenansicht,

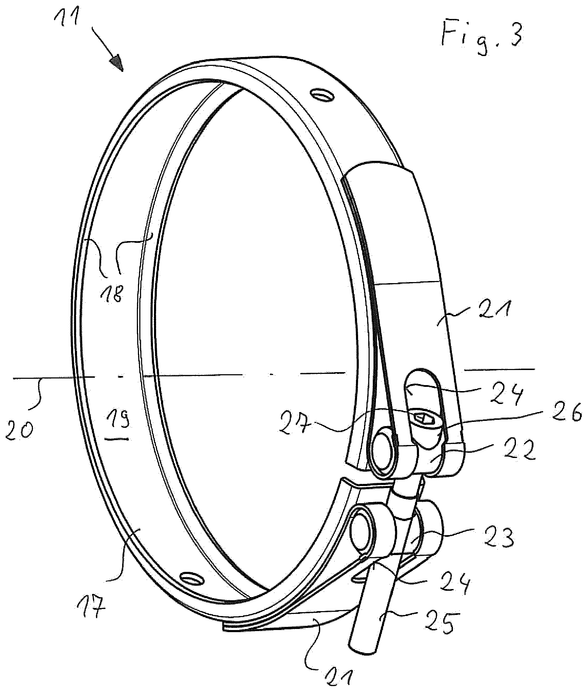

- Fig. 3: einen Spannring mit Spannvorrichtung in perspektivischer Ansicht und

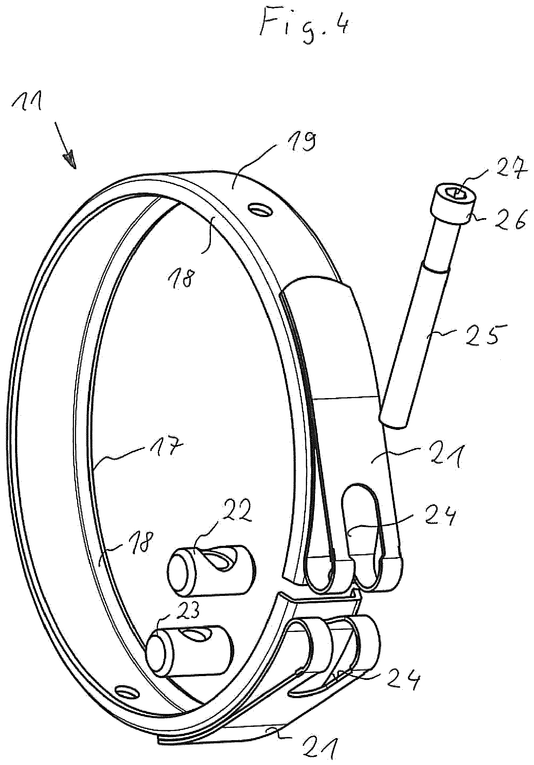

- Fig. 4: den Spannring nach Fig. 3 in Explosionsdarstellung.

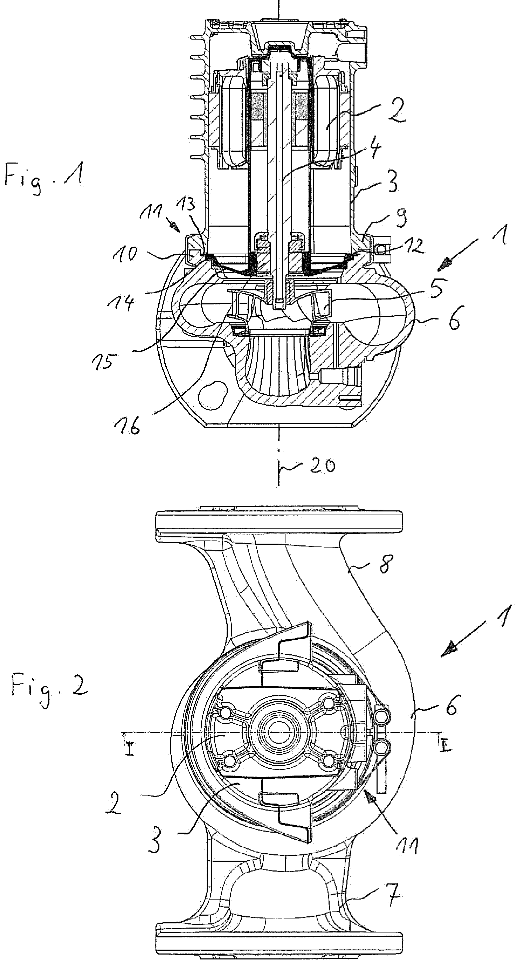

Das in den Figuren 1 und 2 dargestellte Kreiselpumpenaggregat besteht aus einer Kreiselpumpe 1 und einem diese antreibenden Elektromotor 2. Der Elektromotor 2 ist innerhalb eines Motorgehäuses 3 aufgenommen und treibt mit einer Welle 4 ein Kreiselrad 5 der Pumpe 1, welches innerhalb eines Pumpengehäuses 6 drehbar gelagert ist. Das Pumpengehäuse weist einen Saugstutzen 7, durch welchen Flüssigkeit in das Pumpengehäuse eintritt, und einen Druckstutzen 8 auf, durch welchen diese aus der Pumpe austritt.

Das Motorgehäuse 3 weist einen konzentrisch zur Welle 4 angeordneten Flansch 9 auf, das Pumpengehäuse 6 weist einen ebenfalls konzentrisch zur Welle 4 angeordneten Flansch 10 auf, die zur Verbindung beider Gehäuse mittels eines Spannrings 11 verbunden werden.

Innerhalb des pumpengehäuseseitigen Flansches 10 ist eine Zentrierbohrung 12 vorgesehen, in die ein an der Außenseite des Flansches 9 vorspringender ringförmiger Zentriervorsprung 13 eingreift. Der Zentriervorsprung 13 ist unter Eingliederung eines O-Rings 14 sowie einer Lagerplatte 15, die ein zentrales Lager 16 für die Welle 4 aufnimmt, in der Zentrierbohrung 12 aufgenommen. Der O-Ring 14 liegt zwischen dem stirnseitigen Ende der Zentrierbohrung 12 und der Lagerplatte 15 bzw. dem dahinter angeordneten Zentriervorsprung 13 an.

Der Spannring 11 besteht aus einem offenen, sich um etwa 350° um die Flansche 9 und 10 erstreckenden Ringabschnitt, welche ein nach innen, also zu den Flanschen 9 und 10 offenes Rinnenprofil aufweist. Der Ringabschnitt 17 umgreift die Flansche 9 und 10 umfangseitig und mit den Seitenwänden 18 teilweise, die von der Umfangswand 19 zu der Längsmittelachse 20 des Rings 11 divergieren um so beim Spannen des Spannrings 11 die Flansche 9 und 10 aneinanderzupressen.

Nahe den Enden des Ringabschnitts 17 sind an der Außenseite Blechabschnitte 21 angeschweißt, die sich jeweils zu einem Ende des Ringabschnitts 17 erstrecken, an diesem unter Eingliederung eines Bolzens 22 bzw. 23 um 180° umgelenkt und wieder zurückgeführt sind. Im Bereich der Umlenkstelle ist an einem Blechabschnitt ein Zylinderbolzen 22 mit einer quer darin verlaufenden Stufenbohrung vorgesehen, am anderen Blechabschnitt 21 ein Zylinderbolzen 23 mit einer quer darin vorgesehener Gewindebohrung. Die Blechabschnitte sind um die Zylinderbolzen 22 bzw. 23 umgelegt und weisen im Mittelbereich Ausnehmungen 24 auf, welche die Stufenbohrung bzw. die Gewindebohrung für eine Spannschraube 25 bzw. ein diese erreichendes Werkzeug zugänglich machen. Die Spannschraube 25 sitzt mit ihrem Schraubenkopf 26 in der Stufenbohrung des Zylinderbolzens 22, überbrückt den offenen Abschnitt des Ringabschnitts 17, um dann am anderen Ende in das Gewinde des Zylinderbolzens 23 einzugreifen. Die Zylinderbolzen 22, 23 stellen in Verbindung mit der Spannschraube 25 eine Spannvorrichtung dar, mit welcher der offene Ringabschnitt 17 unter Eingliederung der Flansche 9 und 10 gespannt werden kann. Je nachdem wie weit die Spannschraube 25 in die Gewindebohrung des Zylinderbolzens 23 eingedreht wird, werden die Flansche 9 und 10 aneinandergepresst, indem die Seitenwände 18 mit ihrer divergierenden Form diese aneinanderpressen.

Um zu verhindern, dass die Spannschraube 25 zu stark angezogen und somit überspannt wird, wodurch die Gefahr eines Schraubenbruchs und somit eines plötzlichen Öffnens des Spannrings 11 bestünde, weist die Spannvorrichtung ein Spannkraftbegrenzungsmittel auf, das bei dieser Schraube durch den Schraubenkopf 26 gebildet ist. Der Schraubenkopf 26 weist ein Innensechskantprofil 27 auf, welches zur Aufnahme eines entsprechenden Innensechskantwerkzeugs, insbesondere Innensechskantschlüssels vorgesehen ist. Um zu verhindern, dass mithilfe des Werkzeugs die Spannschraube 25 mit einem unzulässig hohen Drehmoment angezogen werden kann, ist das Innensechskantprofil 27 des Schraubenkopfes 26 entsprechend klein dimensioniert. Im vorliegenden Ausführungsbeispiel weist die Spannschraube 25 ein M7-Gewinde auf, der Schraubenkopf 26 entspricht jedoch dem, der üblicherweise zu einer M6-Schraube gehört. Bei dem dargestellten Spannring ist die Spannschraube 25 aus Edelstahl gebildet, die Zylinderbolzen 22 und 23 aus Stahl, so dass die Spannschraube 25 den schwächsten Teil der Verbindung darstellt. Aufgrund der gegenüber gewöhnlichen Spannschrauben kleineren Ausbildung des Innensechskantprofils 27 kann diese Schraube 25 nur mit einem vergleichsweise kleinen Drehmoment angezogen werden. Wenn die Anzugskraft weiter erhöht wird, wird das Innensechskantprofil 27 beschädigt oder zerstört, aber die Spannschraube 25 nicht weiter gedreht. Auf diese Weise ist ein Überlastungsschutz gebildet.

Um sicherzustellen, dass insbesondere beim Lösen der Verbindung die Spannschraube 25 in dem Zylinderbolzen 23 nicht festfrisst, wie dies bei Edelstahl-/Edelstahlverbindungen häufig zu beobachten ist, ist der Zylinderbolzen 23 wie auch der Zylinderbolzen 22 aus verzinktem Stahl gebildet.

### Bezugszeichenliste

- 1: - Kreiselpumpe
- 2: - Elektromotor
- 3: - Motorgehäuse
- 4: - Welle
- 5: - Kreiselrad
- 6: - Pumpengehäuse
- 7: - Saugstutzen
- 8: - Druckstutzen
- 9: - Flansch von 3
- 10: - Flansch von 6
- 11: - Spannring
- 12: - Zentrierbohrung
- 13: - Zentriervorsprung
- 14: - O-Ring
- 15: - Lagerplatte
- 16: - Lager
- 17: - Ringabschnitt
- 18: - Seitenwände
- 19: - Umfangswand
- 20: - Längsmittelachse
- 21: - Blechabschnitt
- 22: - Zylinderbolzen mit Stufenbohrung
- 23: - Zylinderbolzen mit Gewindebohrung
- 24: - Ausnehmungen in 21
- 25: - Spannschraube
- 26: - Schraubenkopf
- 27: - Innensechskantprofil

## Patentansprüche

1. Spannring zur Verbindung zweier Flansche (9, 10), mit mindestens einem offenen Ringabschnitt (17), welcher zur Aufnahme der zu verbindenden Flansche (9, 10) ausgebildet ist, und dessen Enden mittels einer am Ringabschnitt (17) angebrachten Spannvorrichtung (21-27) verbunden sind, mit welcher die Enden des Ringabschnitts (17) aufeinander zu bewegt und unter Eingliederung der Flansche (9, 10) gespannt werden können, wobei die Spannvorrichtung (21-27) ein Spannkraftbegrenzungsmittel (27) und eine Schrauben-, Mutter- Anordnung (23, 25) mit einer Spannschraube (25) aufweist, die ein Schraubenkopf (26) mit Innenprofil (27) zur Aufnahme des Werkzeugs aufweist, **dadurch gekennzeichnet, dass** das Innenprofil (27) des Schraubenkopfes (26) oder der Schraubenkopf (26) eine Größe aufweist, wie sie üblicherweise für eine Schraube kleineren Gewindedurchmessers als der der Spannschraube (25) vorgesehen ist.

2. Spannring nach Anspruch 1, bei dem der Ringabschnitt (17) ein nach innen offenes Rinnenprofil aufweist.

3. Verwendung eines Spannrings nach einem der vorhergehenden Ansprüche zur Verbindung von Pumpengehäuse (6) und Motorgehäuse (3) eines Kreiselpumpenaggregats.

4. Kreiselpumpenaggregat mit einem einen elektrischen Motor (2) aufnehmenden Motorgehäuse (3) und mit einem ein Kreiselrad (5) aufnehmendes Pumpengehäuse (6), mit einem motorgehäuseseitigem Flansch (9) und mit einem pumpengehäuseseitigem Flansch (10), die mittels eines Spannrings (11) nach einem der vorhergehenden Ansprüche miteinander befestigt sind.

5. Kreiselpumpenaggregat nach Anspruch 4, bei dem der motorgehäuseseitige Flansch (9) einen zum Pumpengehäuse (6) vorspringenden Zentriervorsprung (13) aufweist, der in eine pumpengehäuseseitig entsprechend innerhalb des Flansches (10) ausgebildete Zentrierbohrung (12) eingreift.

6. Kreiselpumpenaggregat nach Anspruch 4 oder 5, bei dem Pumpengehäuse (6) und Motorgehäuse (3) unter Eingliederung eines O-Rings (14) dicht miteinander verbunden sind, der stirnseitig mittelbar oder unmittelbar am motorgehäuseseitigen Zentriervorsprung (13) und innerhalb der pumpengehäuseseitigen Zentrierbohrung (12) anliegt.

## Claims

1. A clamping ring for the connection of two flanges (9, 10), with at least one open ring section (17) which is designed for receiving the flanges (9, 10) to be connected, and whose ends are connected by way of a clamping device (21 -27) which is attached on the ring section (17) and with which the ends of the ring section (17) are moved to one another and can be clamped amid the integration of the flanges (9, 10), wherein the clamping device (21 - 27) comprises a clamping force limitation means (27) and a screwnut arrangement (23, 25) with a clamping screw (25), which comprises a screw head (26) with an inner profile (27) for receiving the tool, **characterised in that** the inner profile (27) of the screw head (26) or the screw head (26) has a size, as is usually envisaged for a screw of a smaller thread diameter that that of the clamping screw (25).

2. A clamping ring according to claim 1, with which the ring section (17) has an inwardly open channel profile.

3. The use of a clamping ring according to one of the preceding claims for connection of the pump housing (6) and the motor housing (3) of a centrifugal pump assembly.

4. A centrifugal pump assembly with a motor housing (3) receiving an electric motor (2) and with a pump housing (6) receiving an impeller (5), with a flange (9) on the motor housing side and with a flange (10) on the pump housing side, said flanges being fastened to one another by way of a clamping ring (11) according to one of the preceding claims.

5. A centrifugal pump assembly according to claim 4, with which the flange (9) on the motor housing side comprises a centring projection (13) which projects to the pump housing (6) and which engages into a centring bore (12) which is formed within the flange (10) on the pump housing side in a corresponding manner.

6. A centrifugal pump assembly according to claim 4 or 5, with which the pump housing (6) and the motor housing (3) are sealingly connected to one another amid the integration of an O-ring (14) which on the end-side bears indirectly or directly on the centring projection (13) on the motor housing side and within the centring bore (12) on the pump housing side.

## Revendications

1. Bague de serrage pour le raccordement de deux brides (9, 10), comprenant au moins une partie de bague ouverte (17) réalisée pour recevoir les brides (9, 10) à raccorder, et dont les extrémités sont reliées au moyen d'un dispositif de serrage (21-27) disposé sur la partie de bague (17), lequel permet de déplacer l'une vers l'autre les extrémités de la partie de bague (17) et de les serrer en intégrant les brides (9, 10), le dispositif de serrage (21-27) comportant un moyen de limitation de force de serrage (27) et un ensemble vis-écrou (23, 25) doté d'une vis de serrage (25) qui présente une tête de vis (26) ayant un profil interne (27) destiné à recevoir l'outil, **caractérisée en ce que** le profil interne (27) de la tête de vis (26) ou la tête de vis (26) a une dimension telle que normalement prévue pour une vis de plus petit diamètre de filetage que celui de la vis de serrage (25).

2. Bague de serrage selon la revendication 1, dans laquelle la partie de bague (17) présente un profil en forme de gouttière ouvert vers l'intérieur.

3. Utilisation d'une bague de serrage selon l'une des revendications précédentes pour le raccordement du carter de pompe (6) et du carter moteur (3) d'un groupe motopompe centrifuge.

4. Groupe motopompe centrifuge comprenant un carter moteur (3) recevant un moteur électrique (2) et un carter de pompe (6) recevant une roue centrifuge (5), une bride (9) côté carter moteur et une bride (10) côté carter de pompe, qui sont fixées entre elles au moyen d'une bague de serrage (11) selon l'une des revendications précédentes.

5. Groupe motopompe centrifuge selon la revendication 4, dans lequel la bride (9) côté carter moteur comporte une saillie de centrage (13) faisant saillie vers le carter de pompe (6), laquelle s'engage dans un alésage de centrage (12) réalisé de manière correspondante, côté carter de pompe, à l'intérieur de la bride (10).

6. Groupe motopompe centrifuge selon la revendication 4 ou 5, dans lequel le carter de pompe (6) et le carter moteur (3) sont reliés entre eux de manière étanche par l'insertion d'un joint torique (14) qui est appliqué, côté frontal, indirectement ou directement sur la saillie de centrage (13) côté carter moteur et à l'intérieur de l'alésage de centrage (12) côté carter de pompe.
